# EUROPEAN PATENT SPECIFICATION

(11) **EP 3 932 656 B1**
(45) Date of publication and mention of the grant of the patent: **28.08.2024**
(21) Application number: 21180978.5
(22) Date of filing: 22.06.2021
(51) Int. Cl.: B29D 30/00

(54) **A PALLET FOR THE TRANSPORT OF NON-VULCANIZED TIRES**
PALETTE ZUM TRANSPORT VON UNVULKANISIERTEN REIFEN
PALETTE DE TRANSPORT DE PNEUS CRUS

(30) Priority: 30.06.2020 IT 202000015784
(43) Date of publication of application: 05.01.2022
(73) Proprietor: Cassioli S.r.l., 53049 Torrita di Siena SI (IT)
(72) Inventor: CASSIOLI, Carlo, 53049 Torrita di Siena SI (IT)
(74) Representative: Soldatini, Andrea

(56) References cited:
- WO-A1-2015/003277
- WO-A1-2016/124204
- CN-A- 101 337 564
- JP-A- 2000 198 147
- JP-A- 2016 215 514
- KR-Y1- 200 439 031

## Description

The present invention relates to a pallet for transporting so-called "green" tyres, i.e. tyres which have not yet undergone vulcanisation treatment.

At present, pallets for transporting pre-vulcanised tyres consist of a monolith made by moulding. The monolith is made of plastic material of a suitable type to ensure adequate resistance both to support the weight of the tyre and to withstand transport and its consequences (grasping by handling machinery, possible impacts, etc.).

However, the materials currently used for pallets have proved to be unsuitable for direct contact with this type of tyre. As the not yet vulcanised rubber surface of the tyre has not yet been vulcanised, it tends to be particularly soft and sticky and therefore adheres to the plastic material of the pallet. It turns out that this adhesion is so strong that a tyre weighing, for example, 20 kilograms requires at least ten times the pulling force to detach it from the pallet.

In an attempt to solve this problem, pallets have been made with a conical or truncated cone shaped seat to accommodate the tyre, in order to reduce the surface area of the tyre in direct contact with the pallet (see for example WO 2015/003277 A1, WO 2016/124204 A1 and KR 200439031 Y1).

However, even this solution is not fully satisfactory.

A further expedient is to machine the surface of the truncated cone shaped seat so that it has areas of varying degrees of roughness. This is a further way of reducing the surface area in direct contact between the pallet and the tyre and thus attempting to reduce the adhesion force generated between the two elements.

However, none of the above solutions has been fully satisfactory. The force required to detach the tyre from the pallet is several times greater than the weight of the tyre itself, with considerable problems related to loading/unloading operations and the design of automatic loading/unloading machines. In general, adhesion is also a problem for the tyre itself, as the surface parts adhering to the pallet can become damaged, dirty or even chemically altered.

The material of which this type of pallet is made must be suitable for contact with the tyre; therefore, biodegradable or compostable materials cannot be used as they could chemically alter or cause chemical alteration of the tyre in contact.

Again, in some cases known pallets are covered with fabrics or other materials to limit the adhesion effect. However, even this solution is not optimal as these coatings often do not provide a completely smooth support surface for the tyre (which results in the generation of marks or grooves on the tyre surface) or tend to detach and be dragged along in movement with the tyre during unloading. A pallet of this known type is for example described in the Chinese application CN101337564.

These known pallets are also particularly heavy as they must guarantee, at least in the area where the tyre is placed, a continuous contact surface; in general, since they have to withstand the pulling forces involved in the detachment of the tyre, the known pallets must be particularly robust. These characteristics of the pallet have repercussions on the design of the entire automated tyre loading/unloading line, resulting in increased cost and structural complexity of the systems.

It is therefore an object of the present invention to solve the above problems by providing a pallet for transporting not yet vulcanised tyres which overcomes the defects of the state of the art described above.

In particular, the purpose of the pallet according to the invention is to ensure a strength suitable for supporting and transporting tyres, even of different sizes, but overcoming the inconvenience of adhesion. It is in fact the aim of the invention to provide a pallet that ensures that the tyre does not adhere to the pallet, or at least that the level of adhesion is significantly lower than that of currently known pallets.

The pallet according to the invention is also intended to be easy to handle, easy to maintain and of reduced weight.

It is then a purpose of the pallet according to the invention to be to a large extent recyclable or compostable.

These purposes are achieved by the pallet for the transport of non-vulcanised tyres whose essential characteristics are defined by the first appended claim. Other important additional characteristics are the subject matter of the dependent claims.

The characteristics and advantages of the pallet will become clearer from the following description of an embodiment thereof, given by way of non-limiting example with reference to the appended drawings wherein:

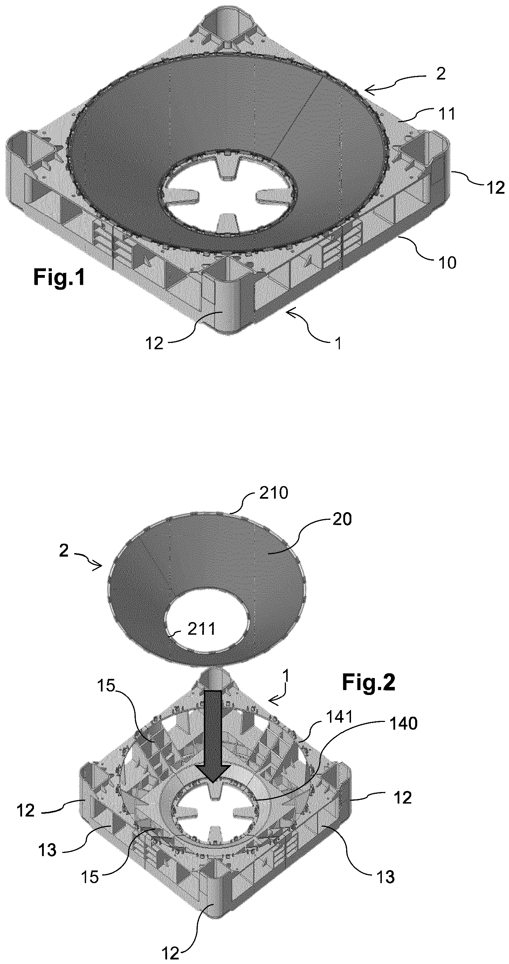

- figure 1 shows a perspective view of the assembled pallet;
- figure 2 shows an exploded view of the pallet in figure 1;

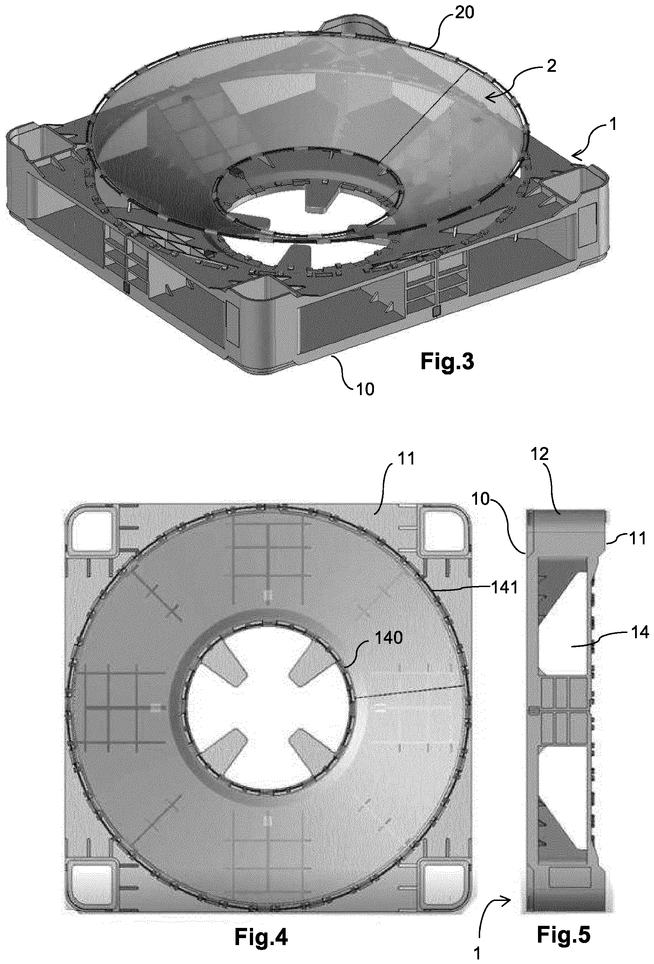

- figure 3 shows, still in a perspective view, the pallet in an assembly phase between a base element and a support element of the pallet itself;
- figure 4 is a view from above of the pallet in the previous figures, already assembled;
- figure 5 shows a side view of the pallet of figure 4;
- figure 6 represents the base element of the pallet in isolation;
- figure 7 is an exploded view of an embodiment of the base element; and
- figure 8 is a detailed view of the first and second connection means between the base element and the support element of the pallet.

With reference to the figures, the pallet according to the invention comprises a first element or base element 1 for resting on the ground. The base element is made of a material suitable for supporting the weight of a tyre; for example, it may be made of plastic material. By way of non-limiting example, the base element 1 may be made of a composite plastic material.

In general, the material of which the base element is made can be any material as long as it meets the minimum requirements of strength and lightness that allow the pallet not to collapse under the weight of the tyre and at the same time allow it to be handled also automatically.

In more detail, the base element 1 comprises at least two opposite and parallel faces, one of which is adapted to rest on the ground 10 and an upper one 11.

In a preferred embodiment, the pallet is substantially parallelepiped shaped. Other shapes can be envisaged, e.g. the pallet can be cylindrical in shape.

The two faces, support 10 and upper 11, are connected by at least one perimeter face extending perpendicularly between them. The perimeter face may be continuous or materialised by a plurality of uprights. The figures illustrate this possible embodiment. In particular, the perimeter face comprises a plurality of vertical uprights 12 extending, in the example illustrated, from the corners of the opposite faces.

A plurality of connecting ribs 13 are then present to connect the two opposite support 10 and upper 11 faces in order to reinforce the structure. Such ribs are by way of non-limiting example as shown in the embodiment illustrated in the figures, in the form of laminated walls extending perpendicularly between the two opposite faces 10, 11. The number and size of these ribs, and of the uprights in general, will vary depending on the specific application; for example, pallets designed to carry heavy tyres (such as truck or lorry tyres) will require a greater number of ribs than pallets designed to carry smaller tyres such as motorbike or car tyres.

Again, the base element also has a seat 14 for housing a tyre. Such seat 14 extends between two base profiles 140, 141, formed on the support face 10 and the upper face 11, respectively.

In a preferred embodiment, the seat 14 has a truncated cone shape. In more detail, the base profiles 140, 141 are circular, coaxial and have different dimensions, so that the large base profile 141 is the one formed on the upper face 11, while the small base profile 140 is the one formed on the lower support face 10. Thus, the seat 14 assumes a truncated cone shape tapered towards the ground, i.e. from the upper face towards the lower or support face of the base element 1.

According to one aspect of the invention the pallet according to the invention further comprises a second element or support element 2, reversibly engaged with the base element 1 and in particular with the seat 14.

The support element 2 is reversibly housed in the seat 14 and comprises a portion 20 of flexible sheet material suitable for defining a tyre support surface.

The flexible sheet material of which the portion 20 is made has non-stick properties with respect to the surface of said non-vulcanised tyre.

For example, such flexible sheet material is a fabric. For example, such flexible sheet material is a coated fabric.

Again, the seat 14 comprises first connection means 142. The support element 2 comprises second connection means adapted to be reversibly engaged with the first connection means 142 to secure the portion 20 made of flexible sheet material in the seat 14.

In more detail, the first and second connection means are of the type adapted to make a reversible snap-in connection.

In a preferred embodiment, the first connection means 142 comprise a first unit and a second unit respectively arranged along the upper base profile and the lower base profile of the seat.

The support element 2 also has, in a preferred embodiment, a truncated cone shape and in particular the support portion defines the perimeter surface of this truncated cone shape.

The second connection means comprise two substantially rigid rings 210, 211 made of metallic or plastic material arranged concentrically and coaxially to define the base profiles of such truncated cone shape of the element 2. It goes without saying that of the two rings, a first 210 will have a smaller diameter and a second 211 will have a larger diameter.

The portion 20 made of sheet material is mounted between the two rings 210, 211, in a tensioned manner, to define the aforementioned truncated cone shape.

Various methods of mounting the portion 20 to the rings 210, 211 can be envisaged, for example through rings or loops or seams or any other known system.

Again, the two rings have dimensions comparable to those of the base 140 and upper 141 profiles of the seat 14, therefore the first ring 210 with a smaller diameter will be associated in assembly with the lower base profile 140, while the second ring 211 with a larger diameter will be associated in assembly with the upper base profile 141.

The portion 20 in assembly thus defines a perimeter wall for the seat 14.

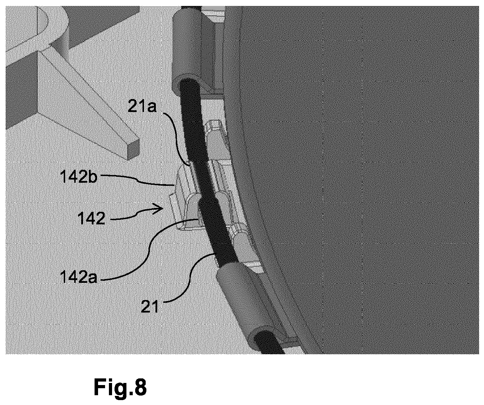

The first connection means engage each snap-in ring reversibly. As shown in Figure 8 for example, the first connection means 142 comprise a snap-in housing 142a for a ring section 210a, 211a of dimensions compatible to be housed within said snap-in housing; the snap-in housing is defined between two elastic tabs 142b which are flexible to move away from each other just enough to allow the ring section to be penetrated within the housing and to elastically return to a neared position when the penetration of the ring section has occurred, in order to lock it within the housing.

Additional tensioning elements 22 may be provided to exert a forcing action on the flexible sheet material portion or at least one of the rings, in order to keep said portion taut within the seat 14. For example, as shown in figure 8, such tensioning elements 22 may be protuberances that fit between an edge of the sheet material portion and the rigid ring. Such tensioning elements 22 may be placed astride a snap-in housing of the first connection means.

Again, the support element 2, in a preferred but non-limiting embodiment, is tensioned in such a way that it can be lifted upwards by at least 30 millimetres when the tyre is detached. Obviously this is only an indication and is not limiting, as it may vary depending on the type of tyre or the size of the pallet.

Inclined connecting walls 15 can be provided between the upper 141 and lower 140 base profiles. Such inclined connecting walls 15 may provide a support for the portion 20 of the second element 2 when mounted.

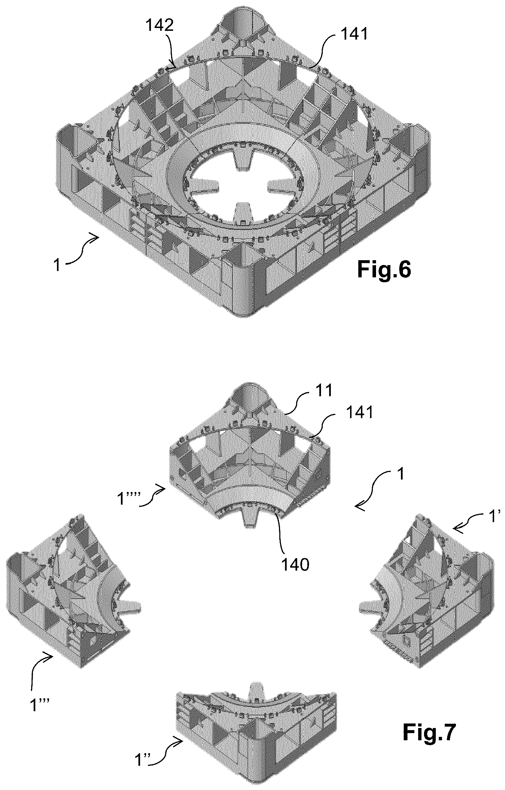

Turning now to figure 7, this shows a further embodiment of the base element 1. As shown, the base element 1 may be made in a plurality of portions 1', 1", ...1ⁿ mutually assembled to define the element itself. In the specific case, the base element 1 is constituted by the assembly of four portions 1', 1", 1‴, 1ʺʺ mutually connected for example by means of snap-in or wedge connections (not visible in the figure) or any other known means suitable for the purpose. This configuration is particularly advantageous in the case of disposal or transport of the pallet.

The base element 1 may also be monolithic, i.e. full, without internal cavities. In this case the seat 14 will be excavated within the base element 1.

The pallet according to the invention has numerous advantages.

Being removable, the support element 2 can be easily removed and replaced if necessary. The pallet according to the invention is therefore easy to repair and generally easy to maintain.

Thanks to the snap-in connection, the support element 2 can be removed or mounted easily, even without the use of specific tools or specialised personnel.

With reference to the base element 1, it may also be made of biodegradable or compostable material; since it does not have to come into direct contact with the non-vulcanised surface of the tyre, the base element may be made of any material. The pallet can therefore be recycled to a large extent.

The pallet according to the invention is particularly light compared to known pallets. Since it does not have to withstand high pulling forces for ungluing the tyre, nor does it have to guarantee a continuous support surface for the tyre, such pallet may be made of a material that is in itself lighter and in general be provided with mouldings or ribs or other hollowed out parts to limit as much as possible the use of material and therefore the overall weight of the object.

Again, the support element 2 defines for the tyre a support surface 20 that is tensioned but not rigid, being in fact represented by the portion of flexible sheet material taut between the two rigid rings. This helps to facilitate the tyre detachment operations in the case of residual adhesion between the tyre and the portion 20, as the non-rigid surface reduces adhesion.

As mentioned above, the flexible sheet material of the portion 20 has non-stick properties with respect to the non-vulcanised surface of the tyre. Such a material is a fabric or coated fabric material.

The present invention has been described herein with reference to preferred embodiments thereof. It is to be understood that there may be other embodiments that relate to the same inventive nucleus, all falling within the scope of protection of the claims provided below.

## Claims

1. A pallet for the support and transport of a non-vulcanised tyre, including:
- a base element (1) for the resting of said pallet on the floor;
- a seat (14) obtained on said base element (1) adapted to house said tyre;
- a support element (2) comprising a portion (20) made of flexible sheet material suitable adapted to define a support surface for said tyre;
**characterised in that**:
- said support element (2) is reversibly housed in said seat,
- said seat (14) comprising first connection means (142),
- said support element (2) comprising second connection means (210, 211) adapted to engage reversibly with said first connection means (142) to fix said portion (20) made of flexible sheet material, wherein said flexible sheet material of said portion (20) has non-stick properties with respect to the surface of said non-vulcanized tyre.

2. The pallet according to claim 1 wherein said seat (14) has a substantially truncated cone shape and extends between two base profiles arranged coaxially and concentrically, a smaller one (140) obtained on a lower face (10) of the base element (1) intended for resting on the ground and a larger one (141) obtained on an upper face (11) of the base element (1) opposite said lower face.

3. The pallet according to claim 2 wherein said support element (2) has a substantially truncated cone shape, said portion made of flexible sheet material being tensioned between two substantially rigid rings arranged coaxially and concentrically defining the base profiles of said substantially truncated cone shape, where of said two rings one is smaller (210) and the other is larger (211).

4. The pallet according to claim 3 wherein said smaller ring (210) has dimensions such as to be associated with said smaller base profile (140) of said seat (14) while said larger ring (211) has dimensions such as to be associated with said larger base profile (141) of said seat (14).

5. The pallet according to claim 3 or 4 wherein said first connection means (142) are arranged along each of said smaller (140) and larger (141) base profiles of said seat (14).

6. The pallet according to claim 5 wherein said first connection means (142) comprise a snap-in housing (142a) defined between two elastic tabs (142b).

7. The pallet according to claim 6 wherein said second connection means comprise said rings (210, 211) and in particular sections (210a, 211a) of said rings of compatible dimensions to be housed in said snap-in housing (142a).

8. The pallet according to claim 7 wherein said tabs (142b) are flexible to move away from each other so much as to allow the ring section (210a, 211a) to penetrate inside said housing (142a) and to return elastically to a neared position when the penetration of the ring section occurred, in order to lock said section within said housing.

9. The pallet according to claim 8 wherein further tensioning elements (22) are provided, for exerting a forcing action on the portion (20) or on at least one of said rings, in order to keep said portion taut within said seat (14).

10. The pallet according to any of the preceding claims wherein said flexible sheet material is a woven material.

## Patentansprüche

1. Palette für die Stützung und den Transport eines nicht vulkanisierten Reifens, einschließlich:
- ein Basiselement (1) für das Auflegen der Palette auf den Boden;
- einen Sitz (14), der auf dem Basiselement (1) erhalten ist und angepasst ist, um den Reifen aufzunehmen;
- ein Stützelement (2), umfassend einen Abschnitt (20), der aus flexiblem Bahnmaterial hergestellt ist, geeignet angepasst, um eine Stützoberfläche für den Reifen zu definieren;
**dadurch gekennzeichnet, dass:**
- das Stützelement (2) in dem Sitz reversibel untergebracht ist,
- der Sitz (14) umfassend erste Verbindungsmittel (142),
- das Stützelement (2) umfassend zweite Verbindungsmittel (210, 211), die angepasst sind, um mit den ersten Verbindungsmitteln (142) reversibel in Eingriff zu stehen, um den Abschnitt (20), der aus flexiblem Bahnmaterial hergestellt ist, zu befestigen, wobei das flexible Bahnmaterial des Abschnitts (20) Antihafteigenschaften in Bezug auf die Oberfläche des nicht vulkanisierten Reifens aufweist.

2. Palette nach Anspruch 1, wobei der Sitz (14) eine im Wesentlichen abgestumpfte Form aufweist und sich zwischen zwei Basisprofilen erstreckt, die koaxial und konzentrisch angeordnet sind, ein kleineres (140), das auf einer Unterfläche (10) des Basiselements (1) erhalten ist, das zum Auflegen auf dem Boden bestimmt ist, und ein größeres (141), das auf einer Oberfläche (11) des Basiselements (1) gegenüber der Unterfläche erhalten ist.

3. Palette nach Anspruch 2, wobei das Stützelement (2) eine im Wesentlichen abgestumpfte Form aufweist und der Abschnitt, der aus flexiblem Bahnmaterial hergestellt ist, zwischen zwei im Wesentlichen starren Ringen gespannt ist, die koaxial und konzentrisch angeordnet sind und die Basisprofile der im Wesentlichen abgestumpften Form definieren, wobei einer der zwei Ringe kleiner (210) ist und der andere größer (211) ist.

4. Palette nach Anspruch 3, wobei der kleinere Ring (210) derartige Abmessungen aufweist, dass er dem kleineren Basisprofil (140) des Sitzes (14) zugeordnet ist, während der größere Ring (211) derartige Abmessungen aufweist, dass er dem größeren Basisprofil (141) des Sitzes (14) zugeordnet ist.

5. Palette nach Anspruch 3 oder 4, wobei die ersten Verbindungsmittel (142) entlang jedes des kleineren (140) und des größeren (141) Basisprofils des Sitzes (14) angeordnet sind.

6. Palette nach Anspruch 5, wobei die ersten Verbindungsmittel (142) ein Einschnappgehäuse (142a) umfassen, das zwischen zwei elastischen Laschen (142b) definiert ist.

7. Palette nach Anspruch 6, wobei die zweiten Verbindungsmittel die Ringe (210, 211) und insbesondere Bereiche (210a, 211a) der Ringe mit kompatiblen Abmessungen umfassen, die in dem Einschnappgehäuse (142a) untergebracht werden sollen.

8. Palette nach Anspruch 7, wobei die Laschen (142b) flexibel sind, um sich weit voneinander weg zu bewegen, so viel, um dem Ringbereich (210a, 211a) zu ermöglichen, in das Gehäuse (142a) einzudringen und in eine nahegelegene Position elastisch zurückzukehren, wenn das Eindringen des Ringbereichs erfolgt ist, um den Bereich innerhalb des Gehäuses zu verriegeln.

9. Palette nach Anspruch 8, wobei weitere Spannelemente (22) bereitgestellt sind, zum Ausüben einer Kraftwirkung auf den Abschnitt (20) oder auf mindestens einen der Ringe, um den Abschnitt innerhalb des Sitzes (14) straff zu halten.

10. Palette nach einem der vorstehenden Ansprüche, wobei das flexible Bahnmaterial ein gewebtes Material ist.

## Revendications

1. Palette destinée au support et au transport d'un pneu non vulcanisé, comportant :
- un élément de base (1) permettant de poser ladite palette sur le sol ;
- un emplacement (14) obtenu sur ledit élément de base (1) conçu pour loger ledit pneu ;
- un élément de support (2) comprenant une partie (20) constituée de matériau en feuille flexible approprié conçu pour définir une surface de support pour ledit pneu ;
**caractérisée en ce que** :
- ledit élément de support (2) est logé de manière réversible dans ledit emplacement,
- ledit emplacement (14) comprenant des premiers moyens de liaison (142),
- ledit élément de support (2) comprenant des seconds moyens de liaison (210, 211) conçus pour venir en prise de manière réversible avec lesdits premiers moyens de liaison (142) pour fixer ladite partie (20) constituée de matériau en feuille flexible, dans laquelle ledit matériau en feuille flexible de ladite partie (20) a des propriétés antiadhésives par rapport à la surface dudit pneu non vulcanisé.

2. Palette selon la revendication 1 dans laquelle ledit emplacement (14) a une forme de cône sensiblement tronqué et s'étend entre deux profils de base agencés coaxialement et concentriquement, un plus petit (140) obtenu sur une face inférieure (10) de l'élément de base (1) prévu pour reposer sur le sol et un plus grand (141) obtenu sur une face supérieure (11) de l'élément de base (1) opposée à ladite face inférieure.

3. Palette selon la revendication 2 dans laquelle ledit élément de support (2) a une forme de cône sensiblement tronqué, ladite partie constituée de matériau en feuille flexible étant mise en tension entre deux anneaux sensiblement rigides agencés coaxialement et concentriquement définissant les profils de base de ladite forme de cône sensiblement tronqué, où, desdits deux anneaux, l'un est plus petit (210) et l'autre est plus grand (211).

4. Palette selon la revendication 3 dans laquelle ledit anneau plus petit (210) a des dimensions telles qu'il est associé audit profil de base plus petit (140) dudit emplacement (14) alors que ledit anneau plus grand (211) a des dimensions telles qu'il est associé audit profil de base plus grand (141) dudit emplacement (14).

5. Palette selon la revendication 3 ou 4 dans laquelle lesdits premiers moyens de liaison (142) sont agencés le long de chacun desdits profils de base plus petit (140) et plus grand (141) dudit emplacement (14).

6. Palette selon la revendication 5 dans laquelle lesdits premiers moyens de liaison (142) comprennent un logement encliquetable (142a) défini entre deux languettes élastiques (142b).

7. Palette selon la revendication 6 dans laquelle lesdits seconds moyens de liaison comprennent lesdits anneaux (210, 211) et en particulier des sections (210a, 211a) desdits anneaux de dimensions compatibles pour être logées dans ledit logement encliquetable (142a).

8. Palette selon la revendication 7 dans laquelle lesdites languettes (142b) sont flexibles pour s'écarter suffisamment l'une de l'autre pour permettre à la section d'anneau (210a, 211a) de pénétrer à l'intérieur dudit logement (142a) et pour revenir élastiquement à une position proche de celle lorsque la pénétration de la section d'anneau s'est produite, afin de verrouiller ladite section au sein dudit logement.

9. Palette selon la revendication 8 dans laquelle des éléments tendeurs supplémentaires (22) sont fournis, pour exercer une action de forçage sur la partie (20) ou sur au moins l'un desdits anneaux, afin de garder ladite partie tendue au sein dudit emplacement (14).

10. Palette selon l'une quelconque des revendications précédentes dans laquelle ledit matériau en feuille flexible est un matériau tissé.
